# EUROPÄISCHE PATENTSCHRIFT

(11) **EP 2 340 582 B1**
(45) Veröffentlichungstag und Bekanntmachung des Hinweises auf die Patenterteilung: **04.01.2012**
(21) Anmeldenummer: 10737015.7
(22) Anmeldetag: 15.07.2010
(51) Int. Cl.: H01M 8/04, H01M 8/06

(54) **VERFAHREN ZUM BETRIEB EINER HOCHTEMPERATUR-BRENNSTOFFZELLE**
METHOD FOR OPERATING A HIGH-TEMPERATURE FUEL CELL
PROCÉDÉ PERMETTANT DE FAIRE FONCTIONNER UNE PILE À COMBUSTIBLE HAUTE TEMPÉRATURE

(30) Priorität: 16.07.2009 AT 11152009
(43) Veröffentlichungstag der Anmeldung: 06.07.2011
(73) Patentinhaber: AVL List GmbH, 8020 Graz (AT)
(72) Erfinder: PRENNINGER, Peter, A-8010 Graz (AT); RECHBERGER, Jürgen, A-8020 Graz (AT)
(74) Vertreter: Babeluk, Michael
(86) Internationale Anmeldenummer: PCT/EP2010/060214
(87) Internationale Veröffentlichungsnummer: WO 2011/006964

(56) Entgegenhaltungen:
- EP-A1- 1 291 948
- WO-A2-2007/117406
- DE-A1-102007 039 593
- US-A1- 2003 003 332

## Beschreibung

Die Erfindung betrifft ein Verfahren zum Betrieb einer Hochtemperatur-Brennstoffzelle, welche im Normalbetrieb zur Stromerzeugung mit flüssigem Brennstoff, vorzugsweise Diesel, versorgt wird und anodenseitig einen Reformer für den flüssigen Brennstoff vorgeschaltet hat, wobei zumindest ein Teil des heißen Anodenabgases über eine Rückführleitung in den Anodenkreislauf rückgeführt wird, wobei der flüssige Brennstoff stromaufwärts eines dem Reformer vorgeschalteten Verdichters in das heiße Anodenabgas eingesprüht oder eingespritzt wird und wobei die für die Reformierung des flüssigen Brennstoffes benötigte Luftmenge dem Gemisch aus Anodenabgas und Brennstoff zugesetzt wird.

Eine Hochtemperatur-Brennstoffzelle, beispielsweise eine Festoxid-Brennstoffzelle (SOFC) mit einem Anodenkreislauf zur Rückführung von Wasser für den Reformierungsprozess, bzw. ein Verfahren zum Betrieb einer derartigen Brennstoffzelle ist beispielsweise aus der AT 502.130 B1 bekannt. Mit diesem Verfahren können Brennstoffzellensystem ohne zusätzliche externe Wasserzufuhr betrieben werden. Das Wasser wird für endotherme Wasserdampfreformierung von Kohlenwasserstoffen benötigt. Werden flüssige Kohlenwasserstoffe wie Benzin oder Diesel verwendet, kann mit Hilfe des rückgeführten Wassers der Reformierungsprozess wesentlich verbessert und die Betriebstemperatur abgesenkt werden.

Je nach Anwendung unterscheiden sich die Betriebsprofile von SOFC Systemen erheblich. In stationären Bereich sind die Systeme meist ständig in Betrieb. Bei mobilen Anwendungen, beispielsweise in elektrischen Versorgungseinheiten von Nutzfahrzeugen (NFZ APU), sind die System nur teilweise in Betrieb und müssen den Rest der Zeit auf einer gewissen Temperatur gehalten werden. Diese Phase, während der kein Strom produziert wird, ist äußerst kritisch, da die Anode der SOFC unter einer reduzierenden Umgebung (mit Kraftstoff) gehalten werden muss, aber kein Wasser für die Reformierung zur Verfügung steht. Dieselbe Problemstellung ergibt sich nicht nur bei diesem Standby-Betrieb sondern auch während des Hochfahrens und des Abkühlens der Brennstoffzelle.

Ein weiteres Problem stellen die Ablagerungen und Verunreinigungen im Reformer und der Brennstoffzelle dar, die im normalen Betrieb anfallen.

Wird ein SOFC System mit Kohlenwasserstoffen betrieben, entstehen bei der Reformierung aber auch in der Anode der SOFC unweigerlich Ablagerungen und Verunreinigungen, die zu einer Leistungsdegradation der SOFC und des Reformers führen. Die wichtigsten Ablagerungen und Verunreinigungen sind Ruß, der thermodynamisch aufgrund des chemischen Gleichgewichtes abhängig von der Temperatur entsteht, Schwefel, der mit dem Kraftstoff zugeführt wird und höhere Kohlenwasserstoffe, die im Reformer nicht vollständig aufgebrochen werden konnten. Alle diese Substanzen lagern sich an katalytischen Funktionsschichten im Reformer oder der SOFC Anode an und bedecken somit aktive Oberfläche, was zu einer Leistungsabnahme führt. Zusätzlich können sich diese Ablagerungen auch in keramische Schichten einlagern und die Materialstruktur und Zusammensetzung verändern. Das Problem besteht nun primär darin diese Substanzen wieder aus dem System zu entfernen, da das Entstehen nicht vollständig verhindert werden kann.

Aus der DE 10 2007 033 150 A1 ist ein Brennstoffzellensystem bekannt, das in einem Kraftfahrzeug zur Stromerzeugung angeordnet ist. Das Brennstoffzellensystem weist einen Reformer zur Herstellung eines Brenngases aus einem Wasserstoff enthaltenden Kraftstoff (z.B. Diesel) und aus einem Sauerstoff enthaltenden Oxidator (z.B. Luft) und zumindest eine Brennstoffzelle auf, welcher das Brenngas als Anodengas und beispielsweise Luft als Kathodengas zugeführt werden. Während des Normalbetriebs werden dem Reformer Kraftstoff und Oxidator zugeführt. Während eines Regenerationsbetriebs wird dem Reformer zunächst nur noch von der Brennstoffzelle stammendes Anodenabgas zugeführt, wobei bei allfälliger nachfolgender Zugabe eines Oxidators darauf zu achten ist, dass möglichst kein Sauerstoff auf die Anodenseite der Brennstoffzelle gelangt.

Aufgabe der Erfindung ist es, ein Verfahren zum Betrieb einer Hochtemperatur-Brennstoffzelle derart zu verbessern, dass auch die eingangs beschriebenen Mängel während des Standby-Betriebs überwunden werden, wobei in weitere Folge auch das Problem der Beseitigung von nicht vermeidbaren Ablagerungen und Verunreinigungen der Brennstoffzelle gelöst werden soll

Diese Aufgabe wird erfindungsgemäß dadurch gelöst, dass bei einem Wechsel vom Normalbetrieb in einen Standby-Betrieb ohne Stromerzeugung die Zufuhr von flüssigem Brennstoff und Luft gestoppt wird und das sich im Anodenkreislauf befindliche Gasgemisch permanent im Kreis geführt wird, sowie dass zur Beseitigung von Ablagerungen und Verunreinigungen in der Hochtemperatur-Brennstoffzelle dem Anodenkreislauf - ausgehend vom Standby-Betrieb - eine definierte Luftmenge zugeführt wird.

Im Gegensatz zur Lehre aus der DE 10 2007 033 150 A1 wird der Anode der Brennstoffzelle Sauerstoff zugeführt, wobei die zugeführte Luftmenge bevorzugt derart bemessen wird, dass sich im Anodenkreislauf nach der Oxidation der sich im Kreislauf befindlichen Kraftstoffbestandteile ein Sauerstoffgehalt von 0.5 - 10 Vol% einstellt.

Ist die Hochtemperatur-Brennstoffzelle in Normalbetrieb und produziert elektrische Energie, wird permanent ein Teil des anfallenden Wassers im Anodenkreislauf im Kreis geführt. Typischerweise werden dabei ungefähr 5% - 50% des Anodenabgases rückgeführt. Damit stellt sich in diesem Kreislauf, ein Wasserpartialanteil von 5% - 20% ein. Wechselt das System nun in den Standby-Betrieb, wird die Stromproduktion abgestellt und über die im Kreislauf befindliche Pumpe bis zu 100% des Anodenabgases rückgeführt.

Gemäß einer Ausführungsvariante der Erfindung kann der Anodenkreislauf während des Standby-Betriebs ausgangsseitig verschlossen werden, um das Ansaugen von Medien, wie beispielsweise Umgebungsluft, zu verhindern.

Die sich im System befindlichen Ablagerungen wie Ruß, Schwefel und höhere Kohlenwasserstoffe können zwar sehr effektiv mit Sauerstoff oxidiert und so aus dem System entfernt werden, allerdings muss bei diesem Reinigungsverfahren darauf geachtet werden, dass die Anode der SOFC nicht irreversibel zerstört wird. Dies kann durch ein entsprechendes Bauprinzip bzw. Stackkonzept erreicht werden.

Das beschriebene Reinigungsverfahren eignet sich z.B. für sogenannte ESC Systeme (Electrolyt Supporte Cells), bei welchen die tragende Struktur der Brennstoffzelle die Elektrolytschicht ist. Die Zellen sind bis zu einem gewissen Grad Sauerstoff-stabil, da sie nur eine sehr dünne Anodenschicht haben, die durch den Sauerstoff oxidiert wird.

Noch besser geeignet sind sogenannte MSC Systeme (Metal Supporte Cells), bei welchen die tragende Struktur eine poröse Metallplatte ist, auf die extrem dünne Keramikschichten aufgebracht werden (Anode, Elektrolyt, Kathode). Von dieser Zelle erwartet man eine weitgehende Sauerstoffstabilität. Die Anode wird zwar vollständig oxidiert, kann aber ohne Zerstörung wieder reduziert werden.

Gemäß einer Variante der Erfindung kann zur Beseitigung von Ablagerungen und Verunreinigungen in der Hochtemperatur-Brennstoffzelle, beispielsweise einer MSC-Brennstoffzelle, die Rückführleitung für das Anodenabgas geschlossen werden und die Anode der Hochtemperatur-Brennstoffzelle sowie der vorgeschaltete Reformer direkt mit Luft gespült werden.

Die Erfindung wird im Folgenden anhand von schematischen Zeichnungen näher erläutert. Es zeigen:
- Fig. 1: eine Vorrichtung zum Betrieb einer Hochtemperatur-Brennstoffzelle gemäß Stand der Technik im Normalbetrieb; sowie die
- Fig. 2: bis Fig. 6 unterschiedliche Betriebzustände eines erfindungsgemäßen Verfahren zum Betrieb einer Hochtemperatur-Brennstoffzelle, dargestellt anhand einer Vorrichtung gemäß Fig. 1.

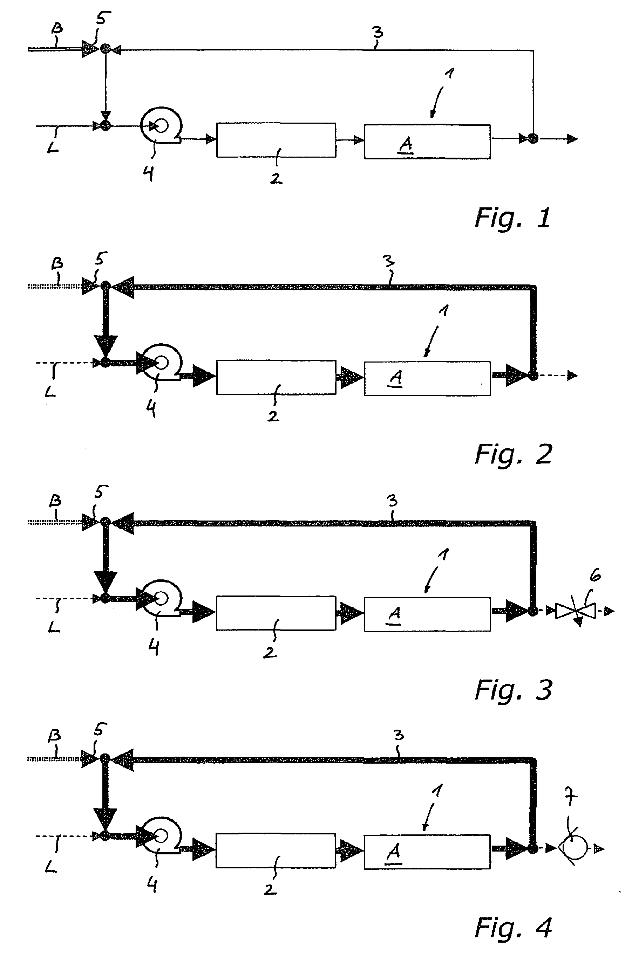

Die in Fig. 1 schematisch dargestellte Vorrichtung zum Betrieb einer Hochtemperatur-Brennstoffzelle ist aus der eingangs erwähnten AT 502.130 B1 bekannt. Die Vorrichtung weist eine Hochtemperatur-Brennstoffzelle 1, bzw. einen Brennstoffzellenstapel auf, von welchem wegen der vereinfachten Darstellung nur die Anode A dargestellt ist. Die Brennstoffzelle wird mit flüssigem Brennstoff B (flüssiger Kohlenwasserstoff, z.B. Diesel) betrieben, welcher der Anode A über einen vorgeschalteten Reformer 2 zugeführt wird. Weiters ist eine Rezirkulationsleitung 3 für das heiße Anodenabgas vorgesehen, die ausgehend von der Auslassseite der Anode A der Hochtemperatur-Brennstoffzelle 1 zur Einlassseite des Reformers 2 führt. Stromaufwärts eines dem Reformer 2 vorgeschalteten Verdichters 4 (beispielsweise eine Pumpe) ist ein Injektor 5 zum Einsprühen oder Einspritzen des flüssigen Brennstoffes B in das heiße Anodenabgas vorgesehen. Die für die Reformierung des flüssigen Brennstoffes B benötigte Luftmenge L wird dem Gemisch aus Anodenabgas und Brennstoff stromaufwärts des Verdichters 2 zugesetzt.

In den Fig. 2 bis Fig. 4 ist jeweils der Standby-Betrieb des erfindungsgemäßen Verfahrens dargestellt, bei welchem die Stromerzeugung beendet, sowie die Zufuhr von flüssigem Brennstoff B und Luft L gestoppt wird (strichliert angedeutet) und das sich im Anodenkreislauf 3 befindliche Gasgemisch permanent im Kreis geführt wird (fett dargestellt). Demzufolge werden dem Kreislauf keine Medien (Diesel, Luft) zugeführt und auch kein Anodenabgas abgeführt. Damit wird der bestehend Wasserpartialanteil aufrecht erhalten und die Anode A mit dem noch im Kreislauf befindlichen Kraftstoff bzw. Brenngas (unter reduzierender Umgebung) versorgt. Die Rußbildung kann durch den im Gasgemisch enthaltenen Wasseranteil wirksam unterdrückt werden. Dieser in den Fig. 2 bis Fig. 4 dargestellte Standby-Betrieb kann auch sehr vorteilhaft während des Abschaltens des Systems zu Anwendung kommen. Dabei wird das Gasgemisch (bis zu 100%) im Anodenkreislauf ohne Zufuhr von Medien (Luft, Brennstoff) im Kreis geführt und das System (aktiv oder passiv) abgekühlt. Erst wenn die Stacktemperatur ungefähr 300°C unterschreitet, wird der Anodenkreislauf abgeschaltet.

Bei den Ausführungsvarianten gemäß Fig. 3 und Fig. 4 ist der Ausgang des Anodenkreislaufes mit einem Ventil 6 oder einem Rückschlagventil 7 versehen worden, um zu verhindern dass beispielsweise Umgebungsluft unkontrolliert über den Ausgang der Anode A angesaugt werden kann.

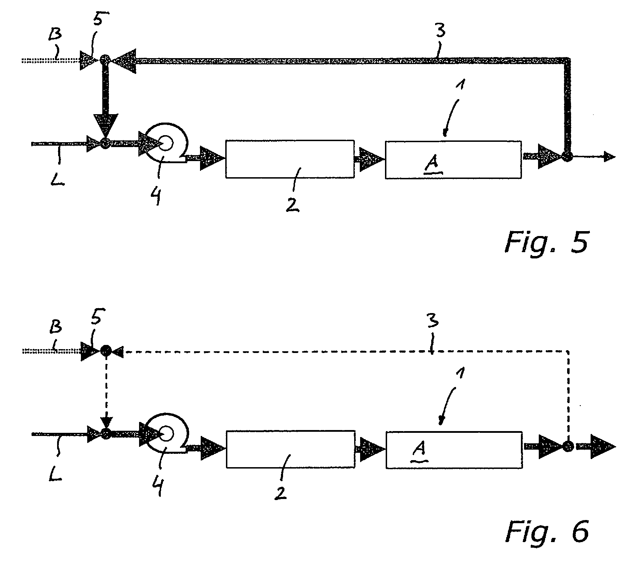

Ausgehend vom Standby-Betrieb wo der Anodenkreislauf geschlossen betrieben wird (wie in den Fig. 2 bis Fig. 4 beschrieben), können nun Ablagerungen und Verunreinigungen entfernt werden, indem eine definierte Luftmenge L in den Kreislauf zugeführt wird, wobei eine entsprechende Abgasteilmenge am Anodenausgang abgeführt wird (siehe Fig. 5). Solange sich noch Kraftstoffbestandteile (H₂, CO) im Kreislauf befinden, werden diese im Reformer durch den mit der Luft zugeführten Sauerstoff oxidiert. Erst wenn sich keine Kraftstoffanteile mehr im Kreislauf befinden, stellt sich ein Sauerstoffanteil im Kreislauf ein. Dieser kann nun beliebig auf Werte zwischen 0.5 - 10 Vol% eingestellt werden. Der Sauerstoff reagiert nun mit den Ablagerungen und oxidiert diese. Die oxidierten Ablagerungen können sich von der Oberfläche lösen und als CO₂, SO₂ und H₂O u.a. in den Anodenkreislauf übergehen. Somit kann die katalytische Oberfläche sehr wirksam von Ablagerungen befreit und die ursprüngliche Leistung der Brennstoffzelle 1 wieder hergestellt werden.

Eine spezielle Ausführungsvariante dieser Reinigungsprozedur ist in Fig. 6 dargestellt. Hat man eine sehr robuste SOFC Stacktechnologie zur Verfügung, beispielsweise MSC Systeme (Metal Supported Cells), kann auch eine direkte Luftversorgung L des über den Reformer 2 führenden Anodenpfades durchgeführt werden. Dabei wird die Rückführleitung 3 stillgelegt (nicht zwingend erforderlich) und der Reformer 2 sowie die Anode A der Brennstoffzelle 1 ausschließlich mit Luft versorgt. Dadurch werden wieder - wie oben beschrieben - alle Ablagerungen und Verunreinigungen oxidiert und aus dem System entfernt.

## Patentansprüche

1. Verfahren zum Betrieb einer Hochtemperatur-Brennstoffzelle (1), welche im Normalbetrieb zur Stromerzeugung mit flüssigem Brennstoff (B), vorzugsweise Diesel, versorgt wird und anodenseitig einen Reformer (2) für den flüssigen Brennstoff vorgeschaltet hat, wobei zumindest ein Teil des heißen Anodenabgases über eine Rückführleitung (3) in den Anodenkreislauf rückgeführt wird, wobei der flüssige Brennstoff (B) stromaufwärts eines dem Reformer (2) vorgeschalteten Verdichters (4) in das heiße Anodenabgas eingesprüht oder eingespritzt wird und wobei die für die Reformierung des flüssigen Brennstoffes benötigte Luftmenge dem Gemisch aus Anodenabgas und Brennstoff zugesetzt wird, **dadurch gekennzeichnet, dass** bei einem Wechsel vom Normalbetrieb in einen Standby-Betrieb ohne Stromerzeugung die Zufuhr von flüssigem Brennstoff (B) und Luft (L) gestoppt wird und das sich im Anodenkreislauf befindliche Gasgemisch permanent im Kreis geführt wird, sowie dass zur Beseitigung von Ablagerungen und Verunreinigungen in der Hochtemperatur-Brennstoffzelle (1) - ausgehend vom Standby-Betrieb - dem Anodenkreislauf eine definierte Luftmenge zugeführt wird.

2. Verfahren nach Anspruch 1, **dadurch gekennzeichnet dass** die zugeführte Luftmenge derart bemessen wird, dass sich im Anodenkreislauf nach der Oxidation der sich im Kreislauf befindlichen Kraftstoffbestandteile ein Sauerstoffgehalt von 0.5 - 10 Vol% einstellt.

3. Verfahren zum Betrieb einer Hochtemperatur-Brennstoffzelle (1), welche im Normalbetrieb zur Stromerzeugung mit flüssigem Brennstoff (B), vorzugsweise Diesel, versorgt wird und anodenseitig einen Reformer (2) für den flüssigen Brennstoff vorgeschaltet hat, wobei zumindest ein Teil des heißen Anodenabgases über eine Rückführleitung (3) in den Anodenkreislauf rückgeführt wird, wobei der flüssige Brennstoff (B) stromaufwärts eines dem Reformer (2) vorgeschalteten Verdichters (4) in das heiße Anodenabgas eingesprüht oder eingespritzt wird und wobei die für die Reformierung des flüssigen Brennstoffes benötigte Luftmenge dem Gemisch aus Anodenabgas und Brennstoff zugesetzt wird, **dadurch gekennzeichnet, dass** bei einem Wechsel vom Normalbetrieb in einen Standby-Betrieb ohne Stromerzeugung die Zufuhr von flüssigem Brennstoff (B) und Luft (L) gestoppt wird und das sich im Anodenkreislauf befindliche Gasgemisch permanent im Kreis geführt wird, sowie dass zur Beseitigung von Ablagerungen und Verunreinigungen in der Hochtemperatur-Brennstoffzelle (1) - ausgehend vom Standby-Betrieb - die Rückführleitung (3) für das Anodenabgas geschlossen wird und die Anode (A) der Hochtemperatur-Brennstoffzelle (1) sowie der vorgeschaltete Reformer (2) direkt mit Luft (L) gespült werden.

4. Verfahren nach einem der Ansprüche 1 bis 3, **dadurch gekennzeichnet, dass** im Standby-Betrieb eine Abgas-Rückführrate von bis zu 100% eingestellt wird.

5. Verfahren nach einem der Ansprüche 1 bis 3, **dadurch gekennzeichnet, dass** während des Abschaltens eine Abgas-Rückführrate von bis zu 100% eingestellt wird.

6. Verfahren nach einem der Ansprüche 1 bis 5, **dadurch gekennzeichnet, dass** der Anodenkreislauf während des Standby-Betriebs ausgangsseitig verschlossen wird, um das Ansaugen von Medien, wie beispielsweise Umgebungsluft, zu verhindern.

## Claims

1. Method for operating a high-temperature fuel cell (1), which in normal mode of generating electrical power is supplied with liquid fuel (B), preferably diesel oil, and is preceded on the anode side by a reformer (2) for liquid fuel, where at least part of the hot anode exhaust gas is recirculated into the anode circuit via a recirculation line (3), and where upstream of a compressor (4) preceding the reformer (2) the liquid fuel B is sprayed or injected into the hot anode exhaust gas, the quantity of air needed for reforming the liquid fuel being added to the mixture of anode exhaust gas and fuel, **characterised in that** on change-over from normal operational mode to standby mode without power generation the supply of liquid fuel (B) and air (L) is stopped and the gas mixture present in the anode circuit is permanently circulated, and that to remove deposits and contaminations in the high-temperature fuel cell (1) - following standby operation - a defined amount of air is introduced into the anode circuit.

2. Method according to claim 1, **characterised in that** the introduced amount of air is determined such that an oxygen content of 0.5 to 10 per cent by volume is established in the anode circuit after oxidation of the fuel components left in the circuit.

3. Method for operating a high-temperature fuel cell (1), which in normal mode of generating electrical power is supplied with liquid fuel (B), preferably diesel oil, and is preceded on the anode side by a reformer (2) for liquid fuel, where at least part of the hot anode exhaust gas is recirculated into the anode circuit via a recirculation line (3), and where upstream of a compressor (4) preceding the reformer (2) the liquid fuel is sprayed or injected into the hot anode exhaust gas, the quantity of air needed for reforming the liquid fuel being added to the mixture of anode exhaust gas and fuel, **characterised in that** on change-over from normal operation to standby operation without power generation the supply of liquid fuel (B) and air (L) is stopped and the gas mixture present in the anode circuit is permanently circulated, and that to remove deposits and contaminations of the high-temperature fuel cell (1) - following standby operation - the recirculation line (3) for the anode exhaust gas is closed and the anode (A) of the high-temperature fuel cell (1) and the preceding reformer (2) are directly flushed with air (L).

4. Method according to any of claims 1 to 3, **characterised in that** an exhaust gas recirculation rate of up to 100% is set in the standby operational mode.

5. Method according to any of claims 1 to 3, **characterised in that** an exhaust gas recirculation rate of up to 100% is set during shut-down of the fuel cell.

6. Method according to any of claims 1 to 5, **characterised in that** the anode circuit is closed on the outlet side during standby operation in order to avoid the sucking in of media, for instance ambient air.

## Revendications

1. Procédé de gestion d'une pile à combustible haute température (1) alimentée en combustible liquide (B) de préférence en gazole en mode de fonctionnement normal pour générer du courant et dont le côté anode est précédé d'un reformeur (2) pour le combustible liquide,
* au moins une partie des gaz anodiques chauds dégagés sont renvoyés par une conduite de retour (3) dans le circuit anodique,
* le carburant liquide (B) est pulvérisé ou injecté dans les gaz anodiques chauds dégagés, en amont d'un compresseur (4) précédent le reformeur (2), et
* la quantité d'air nécessaire au reformage du carburant liquide est ajoutée au mélange des gaz d'échappement anodiques et du combustible,
procédé **caractérisé en ce que**
- lors d'un changement passant du mode de fonctionnement normal à un mode d'attente sans générer du courant électrique, on arrête l'alimentation en combustible liquide (B) et en air (L) et on fait circuler en permanence en boucle le mélange gazeux du circuit anodique, et
- pour éliminer les dépôts et impuretés dans la pile combustible à haute température (1), on fournit une quantité définie d'air au circuit d'anode en partant du mode d'attente.

2. Procédé selon la revendication 1,
**caractérisé en ce qu'**
on dimensionne la quantité d'air fournie de façon qu'après oxydation, le reste de carburant dans le circuit anodique, règle une teneur en oxygène de 0,5 - 10 % Vol.

3. Procédé de gestion d'une pile à combustible haute température (1) alimentée en combustible liquide (B) de préférence en gazole en mode de fonctionnement normal pour générer du courant et dont le côté anode est précédé d'un reformeur (2) pour le combustible liquide,
* au moins une partie des gaz anodiques chauds dégagés sont renvoyés par une conduite de retour (3) dans le circuit anodique,
* le carburant liquide (B) est pulvérisé ou injecté dans les gaz anodiques chauds dégagés, en amont d'un compresseur (4) précédent le reformeur (2), et
* la quantité d'air nécessaire au reformage du carburant liquide est ajoutée au mélange des gaz d'échappement anodiques et du combustible,
**caractérisé en ce que**
- lors d'un changement passant du mode de fonctionnement normal à un mode d'attente sans générer du courant électrique on arrête l'alimentation en combustible liquide (B) et en air (L) et le mélange gazeux qui se trouve dans le circuit anodique est mis en permanence en boucle,
- de même que pour éliminer les dépôts et les impuretés dans la pile à combustible haute température (1), partant du mode d'attente on ferme la conduite de retour (3) pour les gaz d'échappement anodiques et on rince l'anode A de la pile à combustible (1) haute température et le reformeur (2) en aval directement avec de l'air (L).

4. Procédé selon l'une des revendications 1 à 3,
**caractérisé en ce qu'**
en mode d'attente on règle un coefficient de recyclage des gaz d'échappement allant jusqu'à 100 %.

5. Procédé selon l'une des revendications 1 à 3,
**caractérisé en ce que**
pendant la coupure on règle un taux de recyclage de gaz d'échappement allant jusqu'à 100 %.

6. Procédé selon l'une des revendications 1 à 5,
**caractérisé en ce qu'**
on ferme le côté de la sortie du circuit anodique pendant le mode d'attente pour éviter l'aspiration de milieux tels que par exemple de l'air ambiant.
